# EUROPÄISCHE PATENTSCHRIFT

(11) **EP 2 556 741 B1**
(45) Veröffentlichungstag und Bekanntmachung des Hinweises auf die Patenterteilung: **23.08.2017**
(21) Anmeldenummer: 12005652.8
(22) Anmeldetag: 03.08.2012
(51) Int. Cl.: A01F 15/07

(54) **Landwirtschaftliche Rundballenpresse**
Agricultural baler
Presse à balles rondes agricole

(30) Priorität: 10.08.2011 DE 102011111401
(43) Veröffentlichungstag der Anmeldung: 13.02.2013
(73) Patentinhaber: Maschinenfabrik Bernard Krone GmbH, 48480 Spelle (DE)
(72) Erfinder: Horstmann, Josef, Dr.-Ing., 49479 Ibbenbüren (DE)

(56) Entgegenhaltungen:
- EP-A1- 2 196 082
- WO-A1-2011/053125
- DE-A1- 2 634 638

## Beschreibung

Die Erfindung betrifft ein Verfahren zur Steuerung des Gutflusses einer landwirtschaftlichen Rundballenpresse in einer Ausgestaltung gemäß dem Oberbegriff des Anspruchs 1.

Rundballenpressen werden sehr oft zur Bergung von Halmgut eingesetzt. Sie zeichnen sich durch ihren verhältnismäßig einfachen Aufbau und geringe Antriebsleistungen gegenüber Quader-Großballenpressen aus. Nachteilig besteht beim Bergen mit Rundballenpressen jedoch das Problem, dass während der Arbeitsvorgänge Binden und Auswerfen des fertigen Ballens kein Material zugeführt werden kann. Das Verfahren läuft absätzig ab. Das bedeutet, dass in einem ersten Schritt das Erntegut während der Fahrt vom Feld aufgenommen, zu einem runden Ballen geformt und verdichtet wird. Im zweiten Schritt wird durch Anhalten des Traktors mit der Presse die Gutaufnahme unterbrochen, der Ballen wird endverdichtet und mit Garn oder Netz abgebunden und aus der Presskammer ausgeworfen. Der Bindevorgang und das Auswerfen benötigen eine erhebliche Zeitdauer, die teilweise die Zeitdauer des vorausgehenden Ballenbildens erreicht. Seit langem gibt es Bemühungen diese unerwünschten Betriebsunterbrechungen zu vermeiden, um so die Maschinenleistung erheblich zu erhöhen. Um die Nachteile des absätzigen Verfahrens auszuschließen, muss eine Maschine geschaffen werden, welche kontinuierlich Erntegut aufnehmen kann. Um eine kontinuierliche Materialzufuhr zu erreichen, muss das Erntegut während der Binde- und Auswurfzeit zwischengespeichert werden. Bei Beginn eines neuen Arbeitszyklus muss dann innerhalb kürzester Zeit bei gleichzeitigem Nachfluss neu aufgenommenen Materials das zwischengespeicherte Material dem Pressraum zugeführt werden. Bei den diversen Vorschlägen zur Lösung des Problems haben sich zwei grundsätzliche Systeme herauskristallisiert.

Bei dem "mehrkammerigen" Grundprinzip, wie es unter anderem die Offenlegungen DE 27 04 982 A1 und DE 10 2005 020 777 A1 vorschlagen, wird der Hauptpresskammer eine meist kleinere Vorpresskammer vorgeschaltet, in der während des Bindevorgangs das weiter aufgenommene Erntegut zu einem Vorballen gewickelt und gepresst wird. Nach Entleerung der Hauptpresskammer soll dieser dann bei gleichzeitiger weiterer Erntegutzufuhr von der Vorkammer in die Hauptkammer überführt werden, um dort weitergebildet zu werden. Insbesondere der Überführungsvorgang des Vorballens in die Hauptkammer, wobei dieser seine Form und Verdichtung nicht verlieren darf, bereiten in der Praxis große Probleme und erfordern einen außerordentlich hohen Bauaufwand. Kontinuierlich arbeitende Rundballenpressen mit dem zuvor beschriebenen Grundprinzip der zumindest zwei Press- und Wickelkammern sind wohl auf Grund dieser Probleme bisher über das Versuchsstadium nicht hinausgekommen.

Bei den diversen Vorschlägen zu kontinuierlichen Rundballenpressen, die nach dem "einkammerigen" Grundprinzip arbeiten, wird das beim Weiterfahren während der Ballenfertigstellung aufgenommene Erntegut einem der Presskammer vorgelagertem Speicherraum zugeführt. Problematisch ist bei derartigen kontinuierlich arbeitenden Ballenpressen, wie sie unter anderem die EP 0 350 514 A1 und die DE 199 32 336 A1 offenbaren, jedoch der Abbau des in dem Speicherraum aufgestauten Ernteguts. Durch zu langsame Entleerung des Speicherraums bei gleichzeitig zusätzlich einfließendem Erntegut durch die Weiterfahrt sind die Leistungsgrenzen schnell erreicht und ein ungestörter Dauerbetrieb ohne Verringerung der Fahrgeschwindigkeit nicht möglich. Ein weiterer Nachteil besteht darin, dass das im Speicherraum begrenzt vorgepresste Material nach der Überführung in die leere Presskammer wieder expandiert und gewünschte Ballendichten nicht erreicht werden. Kontinuierliche Rundballenpressen nach dem einkammerigen Grundprinzip haben zwar Marktreife erlangt, konnten sich aber insbesondere wegen der fehlenden Leistungsfähigkeit bisher nicht durchsetzen.

Aus der WO 2011/ 053125 A1 ist eine Ballenpresse zum Formen von Ballen aus Feldfrüchten bekannt geworden, bei der der Ballenpresskammer eine Vorballenpresse vorgeordnet ist, welche ein unteres und ein oberes Förderband umfasst, wobei wenigstens eines der Förderbänder in Richtung auf das andere Förderband oder von diesem fortbewegt werden kann. Dabei ist es vorgesehen, dass während der Phase des Einwickelns des Ballens in der Ballenpresskammer das weiterhin aufzunehmende Erntegut in der Vorballenpresse zu einem Vorballen geformt wird. Dazu erfahren die Förderbänder der Vorballenpresse eine Ausrichtung, die einer in Gegenrichtung der Gutflussrichtung offenen Keilform gleicht. Diese Anordnung der Förderbänder sorgt bei einem Antrieb der Förderbänder in entgegengesetzter Richtung dafür, dass in der Vorballenpresse aus dem aufgenommenen Erntegut ein Vorballen gerollt wird. Diese Ballenpresse arbeitet damit nach dem vorstehend beschriebenen, mehrkammerigen Verfahren, dessen Nachteile auch hier zum Tragen kommen.

Hiervon ausgehend liegt der vorliegenden Erfindung die Aufgabe zugrunde, eine verbesserte kontinuierlich arbeitende Rundballenpresse zu schaffen, die Nachteile des Standes der Technik vermeidet und letzteren in vorteilhafter Weise weiterbildet.

Erfindungsgemäß wird die Aufgabe durch die Lehre des Patentanspruches 1 gelöst, wobei die Merkmale der weiteren Ansprüche die Lösung in vorteilhafter Weise weiterentwickeln.

Das erfindungsgemäße Verfahren zur Steuerung des Gutflusses einer landwirtschaftlichen Rundballenpresse zum Bilden von Rundballen aus Erntegut ist auf eine mit einem rückseitigen Auslass zum Auswerfen eines fertigen Rundballens versehenen Presskammer mit Presseinrichtungen, einem Erntegutaufnehmer und nachfolgenden Schneid- und/oder Förderaggregat ausgerichtet, mit einem sich an diesem anschließenden und sich bis zu einem Einlassbereich der Presskammer erstreckenden, als flacher Form- und Presskanal ausgebildeten Speicherraum, der in Speicherphasen des Pressenbetriebs Erntegut aufnimmt und seitlich durch Seitenwände und nach unten und oben durch antreibbare Förderer begrenzt ist, wobei zumindest der Bodenförderer endseitig höhenverstellbar ist, und mit einer Vorrichtung zum Einwickeln eines fertigen Rundballens mit Bindematerial in der Presskammer und einer Steuer- oder Regeleinrichtung, wobei der Speicherraum zumindest zu Beginn der Speicherphase durch einseitige Höhenverstellung zumindest eines Förderers eine in Richtung des Einlassbereichs der Presskammer sich verjüngende keilförmige Ausgestaltung einnimmt, die dann zunehmend durch das Schneid- und/oder Förderaggregat mit Erntegut gefüllt wird und wobei während der Befüllung des Speicherraums die keilförmige Ausgestaltung des Speicherraums aufgehoben wird, so dass dann die antreibbaren Förderer des Speicherraums zumindest eine etwa parallele Lage zueinander einnehmen, wobei sich die keilförmige Ausgestaltung zusätzlich verdichtend auf das Erntegut auswirkt.

Grundsätzlich ist es dabei unerheblich, welche der bekannten Ausführungsformen dabei als Presseinrichtung Anwendung findet. Aufgrund der besonders guten Förderwirkung bietet sich eine Presseinrichtung mit Stabketten- bzw. Stabriemenförderern jedoch vorteilhaft an.
In einer besonders vorteilhaften Ausführung ist die erfindungsgemäße Ballenpresse mit einer semivariablen Presskammer ausgestattet. Eine derartige Ausgestaltung der Presskammer einer Rundballenpresse ist in nahezu allen wesentlichen Einzelheiten mit ihren Vorteilen bekannt und unter anderem der DE 10 2004 023 696 A1 entnehmbar. Ein Hauptgrund für das Scheitern bisheriger Versuche mit kontinuierlichen Pressen war die Übergabe der großen zwischengespeicherten Erntegutmenge in die Presskammer. Pressen mit variablen Presskammern sind völlig ungeeignet, da diese keinen Anfangspressraum haben, der die große Menge schnell aufnehmen kann. Bei den dann bisher nur in Frage kommenden Festkammerpressen besteht das Problem, dass das eventuell auch schon vorverdichtete Erntegutpaket durch die Übergabe und durch den großen Freiraum der leeren Presskammer wieder expandiert und sich komplett auflöst. Schnelle Überfüllung der Presskammer und mangelhafte Ballenfestigkeit sind die Folge. Die zuvor beschriebenen Merkmale der Erfindung bieten bereits eine Lösung für dieses Problem. Die Verwendung einer Ballenpresse mit semivariabler Presskammer erhöht nochmals die Betriebssicherheit und bietet weitere Vorteile.
Dadurch, dass eine derartige Presse gegenüber einer variablen Presse eine Startpresskammer ausbildet, die jedoch wesentlich kleiner ist als das mögliche maximale Presskammervolumen, ist einerseits eine schnelle Aufnahme des gesamten zwischengespeicherten Ernteguts möglich, aber andererseits hat das Erntegut keinen Platz, um wieder zu expandieren und sich aufzulockern.
Die geschickte Abstimmung des Speicherkammervolumens mit dem Startkammervolumen der Presseinrichtung stellt so unter Anwendung des erfindungsgemäßen Steuerungsverfahrens eine optimale Ballenbildung bei maximalem Durchsatz sicher. Insbesondere in Verbindung mit einer semivariablen Presskammer wirkt sich eine möglichst hohe Vorpressung des zwischengespeicherten Erntegutes also besonders vorteilhaft aus, da diese bei der Überführung in die Presskammer und der direkt folgenden Ballenbildung erhalten bleibt. Durch die optimale Steuerung des Gutflusses nach der Erfindung ist es möglich bei gleichbleibender Speicherraumgröße eine wesentlich größere Materialmenge zwischenzuspeichern, oder aber den Speicherraum und damit die gesamte Presse kleiner und kostengünstiger zu gestalten.
Weitere besonders erfinderische Merkmale im Ablauf des kontinuierlichen Pressbetriebs der erfindungsgemäßen Presse schaffen die Voraussetzung für eine wesentlich verbesserte Speicherbefüllung und Vorpressung.
Geregelt durch eine Steuer- und Regeleinrichtung der Presse laufen die verschiedenen Phasen des Gutflusses erfindungsgemäß nach folgendem Verfahren ab:
Während der normalen Pressphase wird das durch die Aufnahmevorrichtung aufgenommene Erntegut zumindest durch den Bodenförderer des Speicherraumes direkt zur Presskammer durchgeleitet, wobei es eventuell vorher noch durch eine Schneid- und Fördereinrichtung zwischen Aufnehmer und Speicher geschnitten wird. Der Bodenförderer und die Press- Fördereinrichtung (Starterwalze) sind dabei in ihre obere Stellung (Normalstellung) verfahren. Nach Erreichen der gewünschten bzw. maximalen Ballenparameter bezüglich Durchmesser und Festigkeit stoppen die Förderer der Speicherkammer und verhindern so weiteren Gutzufluss in die Presskammer. Die Speicherphase beginnt. Somit kann in der Presskammer die Ballenbindung erfolgen.
Durch die jetzt erfolgende Förderrichtungsumkehr der Speicherförderer wird das im Speicher befindliche Material am Speicheranfang mit dem weiter durch die Aufnahmevorrichtung bzw. der Förder- und Schneidvorrichtung einlaufenden Material zusammengeführt, wodurch Netzeinschlüsse in der Ballenkammer vermieden werden und eine Vorverdichtung des Erntegutes schon kurz hinter dem Schneid- und Förderrotor erreicht wird. Der Schneid- und Förderrotor presst nun das Erntegut weiter in die, für eine gute Vorpressung besonders vorteilhaft keilförmig zur Presskammer hin zulaufende Speicherkammer. Der Antrieb der Speicherförderer kann dabei in Abhängigkeit diverser Parameter und/oder sensierten Maschinenzuständen gesteuert werden. Bei trockenem Stroh ist beispielsweise ein weiterer Reversierbetrieb zur Unterstützung der Verdichtung denkbar, wobei bei kurz geschnittenem, feuchtem Gras zur Vermeidung von Stauungen oder Überlastungen des Schneid- und Förderrotorantriebs eine entsprechende schrittweise oder stufenlos geregelte Förderung in Richtung der Presskammer vorteilhaft ist.
Von gleichen Abhängigkeiten gesteuert erfolgt dann ein weiterer besonders vorteilhafter Schritt des Verfahrensablaufes. Der Bodenförderer wird abgesenkt. Die Speicherförderer verlaufen nun parallel zueinander bzw. bilden eine zur Presskammer leicht erweiterte Speicherkammer aus. Durch diesen Schritt wird zum einen ein unerwünscht weiter ansteigender Vorpressdruck in der Speicherkammer vermieden und zum anderen das Speichervolumen erheblich erweitert.
In Weiterbildung der Erfindung ist eine Steuerung der zuvor beschriebenen Funktionen auch in Abhängigkeit des Fortschrittes des Bindevorgangs denkbar, wodurch eine zu schnelle oder nur unzureichende Füllung des Speichers vermieden wird. Nach einer weiteren Ausführung der Erfindung kann zur weiteren Optimierung der Abläufe und damit der Maschinenauslastung von der Steuer- und Regeleinrichtung der Presse ein Fahrgeschwindigkeits-Sollwertsignal vorgegeben werden, welches entweder dem Fahrer angezeigt wird, damit er entsprechend reagieren kann, oder aber vorzugsweise direkt auf die Schleppersteuerung einwirkt und somit die Fahrgeschwindigkeit automatisch regelt.
In der Endphase des Speichervorgangs wird das Erntegut im gefüllten Speicherraum durch das Abdeckelement der Starterwalze, welches nach Absenken des Förderbodens bei gleichzeitig angehobener Starterwalzenstellung aktiv wird, am Einlass zur Presskammer zurückgehalten. Sobald der Bindevorgang abgeschlossen ist, öffnet die Ballenkammer und der Ballen wird ausgeworfen. Schon während des Schließens der Ballenkammer erfolgt das Absenken der Starterwalze zusammen mit der zugeordneten Abdeckung, wodurch der maximale Durchgang von der Speicherkammer zur Presskammer freigegeben wird. Das Startsignal zur Schnellentleerung der Speicherkammer erfolgt bei komplett verschlossener Ballenkammer und bewirkt den Antrieb der Speicherkammerförderer in Richtung Ballenkammer. Die Fördergeschwindigkeit der Speicherkammerförderer ist dabei derart mit der Umlaufgeschwindigkeit der Presseinrichtung abgestimmt, dass das vorverdichtete Erntegutpaket aus der Speicherkammer nicht auseinandergezogen wird. Es wird durch den optimalen Übergang von der Speicherkammer zur Presskammer als komplettes Paket von der Presseinrichtung übernommen und bildet den Kern der nun folgenden Ballenbildung mit dem nachfolgenden Erntegut. Nach erfolgter Schnellentleerung der Speicherkammer werden die Starterwalze und der Bodenförderer umgehend in ihre oberen Stellungen verlagert, um beim neuen, folgenden Presszyklus eine optimale Ballenbildung bei minimaler Kammereinlassöffnung zu gewährleisten.
In Weiterbildung der Erfindung ist eine Ausführung einer kontinuierlichen Rundballenpresse mit einer Steuer- und Regeleinrichtung denkbar, welche auf Grund einer vorgebbaren Mindestzyklenzeit oder auf Grund einer Mindestzyklenzeit welche aus ermittelten Erntegutparametern in Verbindung mit vorgebbaren Ballenparametern, wie beispielsweise Ballendurchmesser, Ballendichte, Ballengewicht oder Bindungsart errechnet wird, den gesamten Presszyklus derart steuert, dass eine maximale Maschinenauslastung erreicht wird.
Die Grundlage der Berechnungen bilden dabei physikalische Grenzen der Verdichtbarkeit des Erntegutes. So wurden dazu in vielen Versuchsreihen Mindestzyklenzeiten für das Erstellen eines hochwertigen Rundballens mit verschiedensten Erntegut- und Ballenparametern ermittelt, welche als Grundlage dienen. Kürzere Zykluszeiten sind zwar technisch möglich, gehen aber zu Lasten der Ballendichte und wirken sich somit nachteilig auf die Ballenqualität und auf den Maschinendurchsatz aus.
Die Steuer- und Regeleinrichtung einer derartigen erfindungsgemäßen Rundballenpresse regelt zu jedem Zeitpunkt des Ballenentstehungsprozesses den gesamten Erntegutfluss von der Gutaufnahme bis zur Ballenablage derart zeitgesteuert, dass in der jeweiligen Sollpresszeit ein wunschgemäßer Ballen bei maximaler Maschinenauslastung entsteht. Wenn die Steuer- und Regeleinrichtung der Rundballenpresse dabei bei einem Selbstfahrer der Antriebseinheit oder bei einem Gespann dem Zugfahrzeug ein Fahrgeschwindigkeits-Sollwertsignal bereitstellt, worauf die Fahrgeschwindigkeit vorzugsweise automatisch gesteuert wird, ist bei maximaler Fahrerentlastung eine optimale Auslastung und Flächenleistung der kontinuierlichen Rundballenpresse nach der Erfindung erreicht.
In einer weiteren, besonders vorteilhaften Ausführung der erfindungsgemäßen Rundballenpresse ist diese mit einer dem Pressraum nachgeschalteten Ballenwickeleinrichtung ausgestattet. Die Ballenwickeleinrichtung ist entweder angehängt oder vorzugsweise in bekannter Weise auf einem gemeinsamen Fahrgestell montiert. Somit können durch das erfindungsgemäße Verfahren erstmals mit einer Rundballenpresse in einem Arbeitsgang kontinuierlich Ballen gepresst, mit Folie eingewickelt und auf dem Feld abgelegt werden.
Die Erfindung wird nachfolgend anhand eines bevorzugten Ausführungsbeispiels und zugehöriger Zeichnung näher erläutert. In der Zeichnung zeigen:
- Fig. 1:: eine schematische Seitenansicht einer kontinuierlichen Rundballenpresse zur Nutzung des erfindungsgemäßen Verfahrens zur Steuerung des Gutflusses in einer Betriebsposition, die den normalen Pressbetrieb darstellt,
- Fig. 2:: eine schematische Seitenansicht der Rundballenpresse aus Fig. 1 in einer Betriebsposition, die die Anfangsphase des Speicherbetriebs darstellt, wobei sich der Bodenförderer in oberer Position befindet,
- Fig. 3:: eine schematische Seitenansicht der Rundballenpresse aus Fig. 1 in einer Betriebsposition, die den weiteren Speicherbetrieb darstellt, wobei sich der Bodenförderer in abgesenkter Position befindet,
- Fig. 4:: eine schematische Seitenansicht der Rundballenpresse aus Fig. 1 in einer Betriebsposition, die den Speicherbetrieb in der Endphase darstellt,
- Fig. 5:: eine schematische Seitenansicht der Rundballenpresse aus Fig. 1 in einer Betriebsposition, die die Schnellentleerung der Speicherkammer bei abgesenkter Starterwalze darstellt.

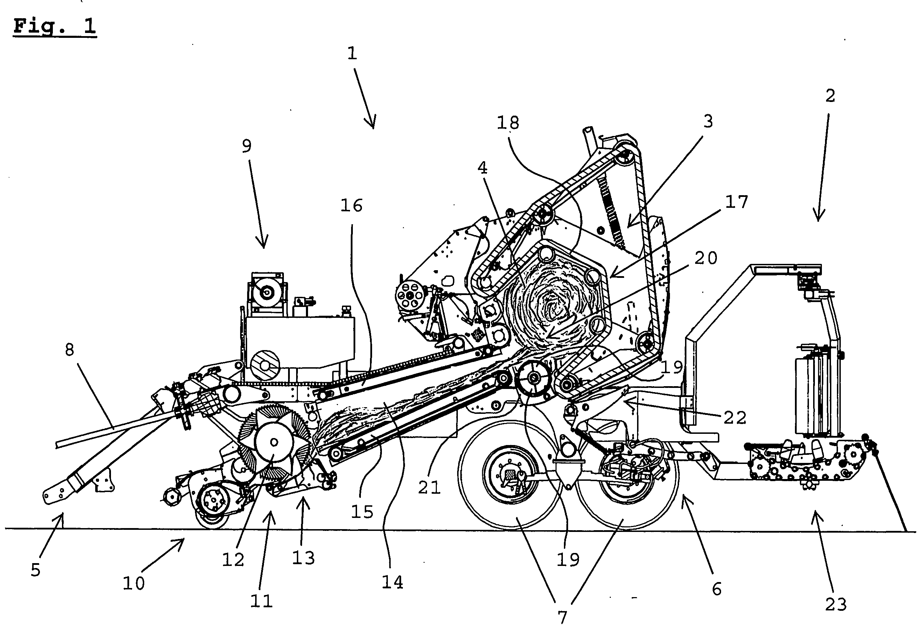

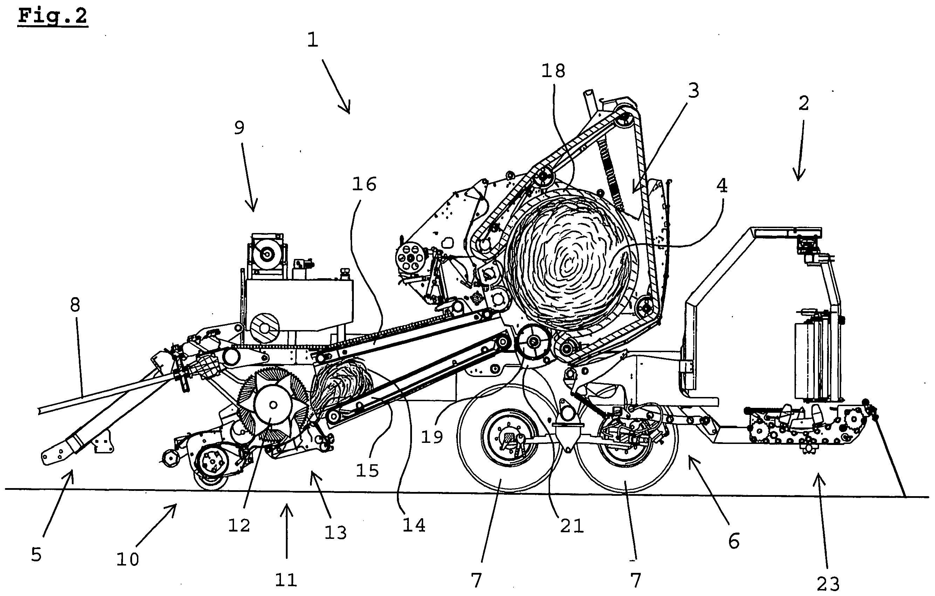

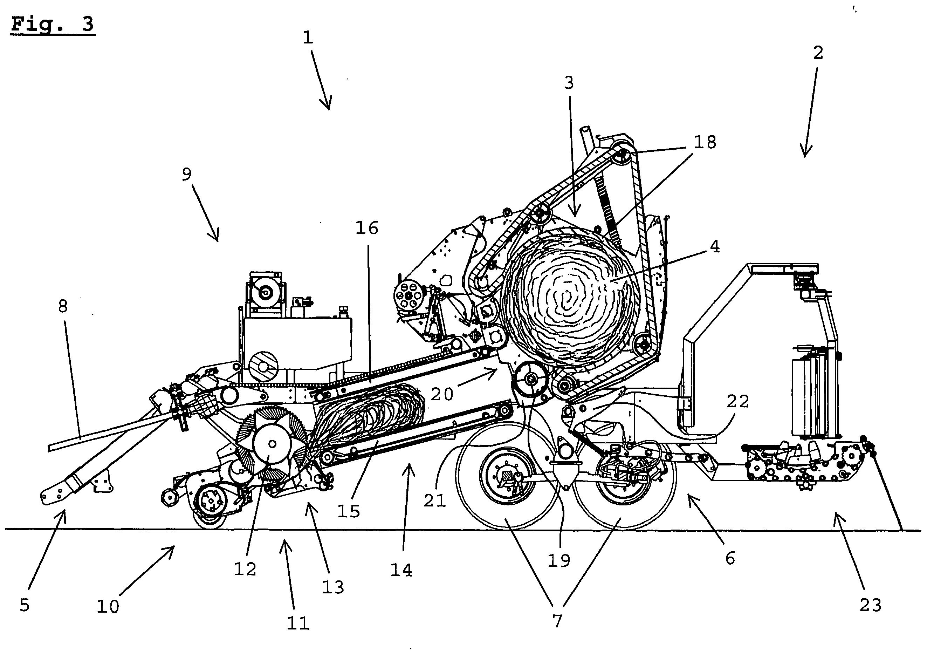

Die Figuren 1 bis 5 zeigen alle das gleiche Ausführungsbeispiel einer kontinuierlich arbeitenden Rundballenpresse 1 in ihren verschiedenen Betriebsphasen. Die dargestellte Rundballenpresse 1 des Beispiels ist vorteilhaft mit einer direkt angebauten Ballenwickelvorrichtung 2 zum Einwickeln der aus der Ballenpresskammer 3 übernommenen Rundballen 4 mit Folie und anschließendem Ablegen der Ballen 4 auf dem Feld kombiniert. Beide Einheiten ruhen auf einem gemeinsamen, über eine Zugdeichsel 5 mit einem Zugfahrzeug, insbesondere landwirtschaftlichen Schlepper, verbindbaren Fahrgestell 6, welches sich über Räder 7 zum Boden abstützt. Der Antrieb der gesamten Maschinenkombination erfolgt über eine mit dem Zugfahrzeug koppelbaren Gelenkwelle 8, von der aus die Antriebsenergie einerseits zum Antrieb der Bordhydraulik 9 und andererseits zu den mechanisch angetriebenen Komponenten verzweigt wird.
Da die kontinuierliche Rundballenpresse des Ausführungsbeispiels als Aufsammelpresse ausgeführt ist, weist sie im vorderen Bereich einen Erntegutaufnehmer 10, eine sogenannte Pickup, zur Aufnahme von auf dem Boden zumeist in Schwaden liegenden Erntegut auf. An diese schließt sich in Gutflussrichtung entgegen der Fahrtrichtung F eine Förder- und Schneideinrichtung 11 an, die das Erntematerial von der Pickup 10 übernimmt und mittels einer Rotorwalze 12 weiterfördert, wobei es wahlweise durch schaltbare Schneidmessergruppen 13 gleichzeitig geschnitten wird. Im weiteren Gutfluss ist zwischen der Förder- und Schneideinrichtung 11 und der Ballenpresskammer 3 ein Speicherraum 14 angeordnet, welcher das von der Förder- und Schneideinrichtung 11 weiterbeförderte Erntegut entweder zwischenspeichert, oder durch den das Erntegut zur Presskammer 3 weitergefördert wird.
Der Speicherraum ist seitlich durch Seitenwände und nach unten und oben durch sich über seine gesamte Länge erstreckende Fördereinrichtungen 15, 16 begrenzt. Die Förderer 15, 16 sind vorzugsweise als Bandförderer mit Mitnehmern, wie beim Ausführungsbeispiel, oder als Stabketten- bzw. Stabriemenförderer ausgebildet. Ausführungen mit Förderwalzen sind ebenso denkbar. Der untere Bodenförderer 15 ist an seinem vorderen Ende nahe der Förder- und Schneideinrichtung 11 derart schwenkbeweglich gelagert, dass durch die Höhenverlagerung des Bodenförderers 15, an seinem in Gutflussrichtung gesehenen hinteren Ende, der Speicherraum 14 in seiner Form veränderbar ist. Die Fig. 1 und 2 zeigen den Bodenförderer 15 in seiner nach oben verlagerten Stellung, wodurch eine in Gutflussrichtung keilförmig zulaufende Gestaltung des Speicherraumes 14 bewirkt wird. In der unteren Stellung des Bodenförderers 15, wie in den Fig. 3 bis 5 dargestellt, verlaufen der Bodenförderer 15 und der obere Deckenförderer 16 des Speicherraumes 14 zumindest parallel oder aber derart zueinander, dass sich der Speicherraums 14 zu seinem der Presskammer 3 zugewandtem Ende hin leicht erweitert.
Die Veränderung der Speicherraumform kann in einer weiteren Ausführungsform auch durch eine zusätzliche Verstellmöglichkeit des oberen Förderers 16 erfolgen, erfordert nachteilig jedoch auch zusätzlichen konstruktiven Aufwand und Kosten.
Im Gutfluss dem Speicherraum nachgeordnet folgt die Ballenpresskammer 3 der Rundballenpresse 1. Bei der Rundballenpresse 1 des Ausführungsbeispiels ist die Presskammer 3 besonders vorteilhaft als semivariable Presskammer 3 ausgestaltet. Entgegen einer reinen variablen Presskammer, weist diese Presskammer 3 einen Anfangspressraum, eine Startpresskammer 17 auf, bis zu deren Durchmesser die Presse nach dem System einer reinen Festkammermaschine arbeitet. Bei weiterer Gutzufuhr weicht die Presseinrichtung 18 nach dem System einer variablen Presskammer nach außen aus und ermöglicht so die Bildung von Ballen variabler Größen, die über den Durchmesser der Startpresskammer 17 hinaus gehen. Als weiteres der Presskammer 3 zugeordnetes Presselement ist im unteren Bereich der Presskammer 3 eine Walze angeordnet, welche allgemein bekannt als Starterwalze 19 bezeichnet wird. Erfindungsgemäß übernimmt sie jedoch unter anderem auch Aufgaben als Fördereinrichtung 19 und ist deshalb teils auch so bezeichnet. Die Starterwalze 19 ist derart angeordnet, dass sie die untere Begrenzung des Ernteguteinlasses 20 der Presskammer 3 vom Speicherraum 14 bildet. Neu und besonders vorteilhaft an der Starterwalze 19 der Rundballenpresse 1 des Ausführungsbeispiels ist zum einen die Möglichkeit der Höhenverlagerung der Walze 19, wodurch der Einlass 20 erweitert, beziehungsweise eingeengt werden kann, und zum anderen ein der Starterwalze 19 zugeordnetes Abdeckelement 21, welches die Walze 19 in ihrem zum Speicherraum 14 hin weisenden Bereich am Umfang abdeckt.
Für eine schnelle aber schonende Übergabe der Rundballen 4 aus der Presskammer 3 zur Ballenwickelvorrichtung 2 ist die Rundballenpresse 1 mit einer verschwenkbaren Übergabeeinrichtung 22 ausgestattet, welche derart geschickt angeordnet und ausgebildet ist, dass sie in keiner ihrer Betriebsstellungen durch andere bewegte Maschinenteile kollisionsgefährdet ist. Des weiteren ist die Übergabeeinrichtung 22 derart angetrieben, dass sie nach erfolgter Ballenübergabe sofort wieder ihre obere Ausgangsstellung einnimmt und so als Auffangmulde für eventuelles Bröckelgut und bereits in die Presskammer einlaufendes Erntegut dient, wobei die Presseinrichtung 18 der sich gleichzeitig schließenden Presskammer 3 dieses Gut abstreift und in die Presskammer 3 verlustfrei aufnimmt.
Das erfindungsgemäße, durch eine Steuer- und Regeleinrichtung der Rundballenpresse 1 gesteuerte Zusammenwirken aller Baugruppen wird durch die in den Figuren 1 bis 5 dargestellten Phasen eines Presszyklus verdeutlicht.

Fig.1 zeigt eine schematische Seitenansicht einer erfindungsgemäßen kontinuierlichen Rundballenpresse 1 in einer Betriebsposition, die den normalen Pressbetrieb darstellt. Aufgenommenes Erntegut wird direkt durch den Speicherraum 14 in die Presskammer 3 geleitet. Zumindest der untere, aber vorteilhaft beide Speicherförderer 15, 16 laufen dabei mit Förderrichtung Presskammer 3. Der untere Förderer 15 und die Starterwalze 19 befinden sich in der oberen Stellung. In der Presskammer wird fortschreitend ein Ballen 4 bis zur vorgegebenen Größe wickelnd gepresst.

Fig. 2 zeigt die Rundballenpresse 1 in der dann folgenden Betriebsposition, welche die Anfangsphase des Speicherbetriebs darstellt. Der Pressballen 4 hat seine vorgegebene Größe und Festigkeit erreicht. Das Netz zur Bindung des Ballens 4 wird in die Ballenkammer 3 eingeschossen. Um Ernteguteinschlüsse zwischen den Netzlagen zu vermeiden stoppen die Speicherförderer 15, 16 die weitere Erntegutzufuhr in die Presskammer 3. Parameterabhängig wird ihr Antrieb dazu kurzzeitig gestoppt und dann umgekehrt, oder aber sofort umgekehrt. Ihre Förderwirkung entgegen dem Erntegutfluss in Richtung der Förder- und Schneideinrichtung 11, bewirkt ein Zusammenführen des im Speicherraum 14 befindlichen Erntegutes mit dem stetig durch die Förder- und Schneideinrichtung 11 in den Speicherraum 14 geförderten Erntegut, wodurch es eine erhebliche Vorpressung erfährt. Das fortlaufend in den Speicherraum 14 eingeförderte Erntegut wird unter Druck in Richtung Presskammer 3 gedrückt, wobei es durch die vorteilhafte keilförmige Ausgestaltung des Speicherraums 14 zusätzlich verdichtet wird und zusammenhält. Die Speicherförderer 15, 16 unterstützen diesen Vorgang insbesondere in Abhängigkeit von vorgegebenen und ermittelten Erntegutparametern bezüglich dessen Verdichtbarkeit. Das führt dazu, dass sie dabei sowohl schrittweise oder dauernd in Gutflussrichtung, oder aber auch entgegen der Gutflussrichtung, oder gar nicht angetrieben werden. Der Bodenförderer 15 und die Starterwalze 19 befinden sich dabei noch in ihren oberen Stellungen.

Fig. 3 stellt die nächste Phase des Speichervorgangs dar. Zu einem von der Steuer- und Regeleinrichtung ermittelten Zeitpunkt und/oder durch von Sensoren ermittelte Maschinenzustände, wird der Bodenförderer 15 in die untere Position verlagert. Das Speichervolumen wird dadurch erheblich vergrößert, Überlastungen durch zu hohe Vorverdichtung werden vermieden und der weitere Speicherbetrieb sichergestellt. Die Speicherförderer 15, 16 werden weiterhin wie zuvor beschrieben angesteuert.

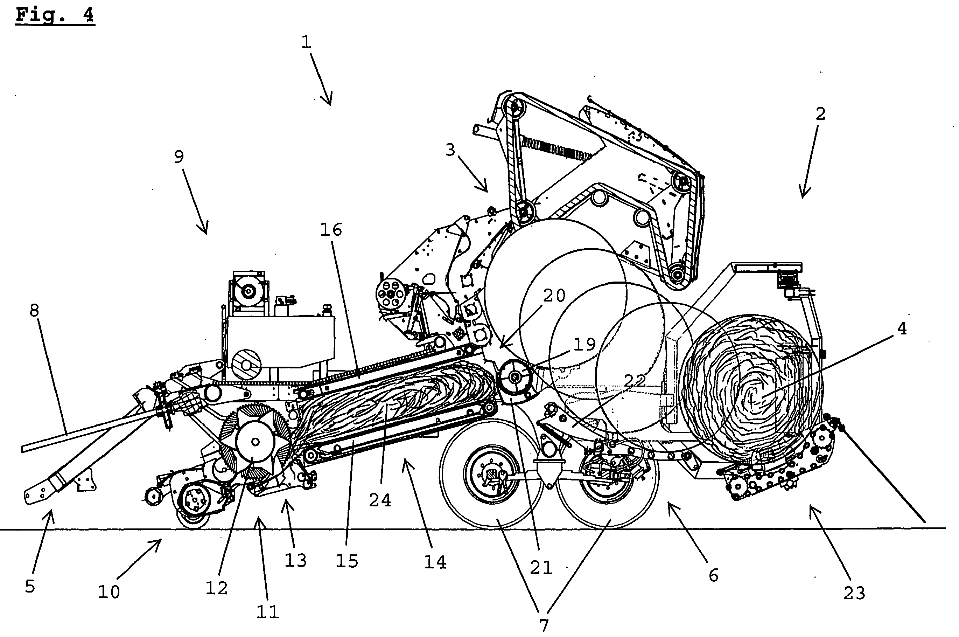

Fig. 4 stellt den Speichervorgang in seiner Endphase dar. Der Bindevorgang in der Presskammer 3 ist abgeschlossen. Die Ballenpresskammer 3 wird automatisch geöffnet und der Ballen 4 ausgeworfen. Direkt nach dem Verlassen der Presskammer 3 wird der Rundballen 4 von der Übergabeeinrichtung 22 schonend aufgenommen und kontrolliert an die Ballenwickelvorrichtung 2 zur Aufnahme auf dem Wickeltisch 23 weitergeleitet. Durch geschickt gewählte Abstände und Höhenunterschiede funktioniert diese Übergabe sehr betriebssicher alleine durch die Schwerkraft des Ballens 4. Der Speicherraum 14 ist jetzt durch optimale Abstimmung der Abläufe bis zum Einlass 20 der Presskammer 3 komplett gefüllt. Die immer noch in oberer Position befindliche Starterwalze 19 begrenzt den Einlass 20 auf ein Mindestmaß und hält gleichzeitig das im Speicheraum 14 gespeicherte Erntegut durch das ihr zugeordnete Abdeckelement 21 zurück.

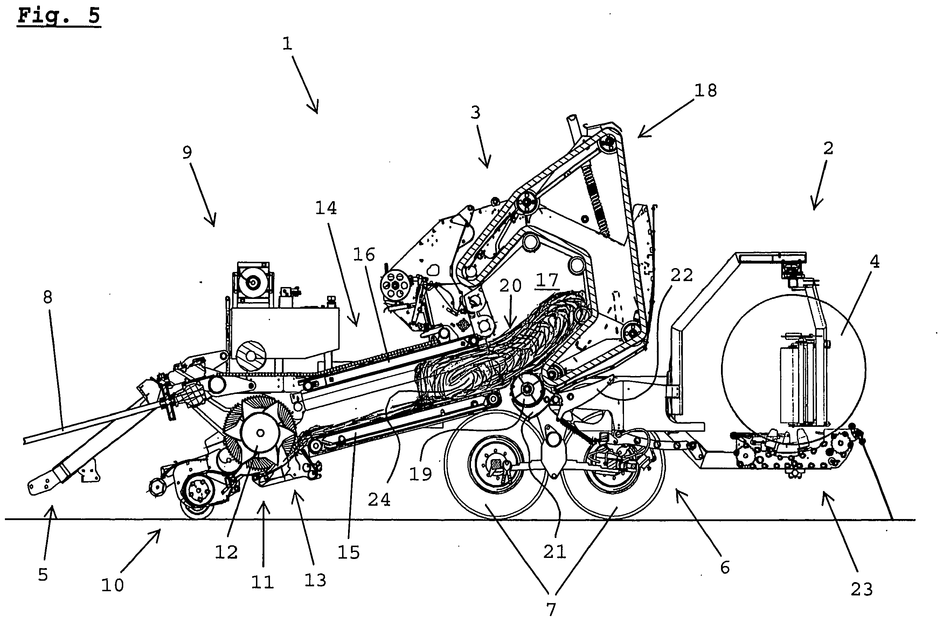

Fig. 5 stellt die Rundballenpresse 1 in einer Betriebsposition während der Speicherentleerungsphase dar. Bereits während der Ballenübergabe, sobald sich der Ballen 4 in einer Position befindet, in der eine Kollision mit der sich schließenden Ballenkammer 3 ausgeschlossen ist, schließt sich diese wieder. Noch während des Schließvorgangs verlagert sich die Starterwalze 19 mit der ihr zugeordneten Abdeckung 21 in die untere Position. Durch diese Verlagerung der Starterwalze 19 erweitert sich die Einlassöffnung 20 der Ballenpresskammer 3 auf zumindest den vollen Querschnitt des, durch den nach unten verlagerten Bodenförderer 15, erweiterten Speicherraumes 14 an seinem hinteren, der Presskammer 3 nächstliegenden Ende. Wie in Fig. 5 deutlich zu erkennen ist, bildet die nach unten verlagerte Starterwalze 19 zusammen mit dem ebenfalls nach unten verlagerten Bodenförderer 15 des Speicherraumes 14 und der, bei zwischenzeitlich geschlossenen Presskammer 3, direkt an die Starterwalze 19 angrenzenden Presseinrichtung 18 der Presskammer 3 eine optimale Förderstrecke für eine ungehinderte, möglichst schnelle Überführung des zwischengespeicherten Erntegutpaketes 24 vom Speicherraum 14 in die Presskammer 3. Die Starterwalze 19 wird in dieser Phase zur Fördereinrichtung 19. Der durch das Abdeckelement 21 als Sperreinrichtung für den Speicherraum 14 wirkende Bereich der Starterwalze 19 liegt durch das Absenken der Walze 19 nicht mehr im Gutfluss und ist damit wirkungslos.

Der Bodenförderer 15 und der Deckenförderer 16 des Speicherraumes 14 werden für eine möglichst schnelle und zusammenhängende Übergabe des Erntegutpaketes 24 derart an die Förder/Umlaufgeschwindigkeiten der Presseinrichtung 18 und der Starterwalze 19 angepasst, dass sie das zwischengespeicherte Erntegut als Paket 24 in die Presskammer 3 schieben. Dort wird es von der Presseinrichtung 18 übernommen, sofort in Drehung versetzt und mit dem nachfolgenden Erntegut als Ballenkern zur weiteren Ballenbildung genutzt. In Fig. 5 ist deutlich zu erkennen, wie vorteilhaft sich die Verwendung einer Rundballenpresse 1 mit semivariabler Ballenkammer 3 auswirkt. Das aus dem Speicherraum 14 überführte Erntegutpaket 24 hat, in der volumenmäßig genau auf das Speichervolumen abgestimmten Ballenkammer 3, gar keine Möglichkeit zu expandieren und sich wieder aufzulösen. Nach Überführung des vorverdichteten, zusammenhängenden Erntegutpaketes 24 in die Startkammer 17 der Presseinrichtung 18 ist diese bereits ausgefüllt und kann sich nur unter weiterer Verdichtungswirkung auf das Erntegut weiter ausdehnen.
Unmittelbar nach der Entleerung des Speicherraums 14 werden der Bodenförderer 15 und die Starterwalze 19 wieder in ihre obere Normalstellung verlagert, wie in Fig. 1 dargestellt. Ein neuer Ballenbildungszyklus beginnt. Gleichzeitig wird der zuvor erstellte Rundballen auf dem Wickeltisch 23 der Wickeleinrichtung 2 mit Folie umwickelt und rechtzeitig vor Fertigstellung des nächsten Ballens auf dem Feld abgelegt. Ein Betrieb der Rundballenpresse 1 mit Ballenwickelvorrichtung 2 im reinen Pressbetrieb, ohne das Einwickeln der Ballen in Folie, ist selbstverständlich auch möglich.
Obwohl die Erfindung an einem Ausführungsbeispiel einer Rundballenpresse 1 mit semivariablem Pressraum 3 und einer nachgeschalteten Ballenwickelvorrichtung 2 dargestellt und beschrieben wurde, ist diese in gleicher Weise oder im Rahmen des Könnens eines Fachmannes in abgewandelter Weise auch an Rundballenpressen mit anderen Presskammern und auch ohne Ballenwickeleinrichtung anwendbar.

## Patentansprüche

1. Verfahren zur Steuerung des Gutflusses einer landwirtschaftlichen Rundballenpresse (1) zum Bilden von Rundballen aus Erntegut in einer mit einem rückseitigen Auslass zum Auswerfen eines fertigen Rundballens versehenen Presskammer (3) mit Presseinrichtungen (18), einem Erntegutaufnehmer (10) und nachfolgenden Schneid- und/oder Förderaggregat (11), einem sich an diesem anschließenden und sich bis zu einem Einlassbereich (20) der Presskammer (3) erstreckenden, als flacher Form- und Presskanal ausgebildeten Speicherraum (14), der in Speicherphasen des Pressenbetriebs Erntegut aufnimmt und seitlich durch Seitenwände und nach unten und oben durch antreibbare Förderer (15, 16) begrenzt ist, wobei zumindest der Bodenförderer (15) endseitig höhenverstellbar ist, und mit einer Vorrichtung zum Einwickeln eines fertigen Rundballens mit Bindematerial in der Presskammer (3) und einer Steuer- oder Regeleinrichtung, **dadurch gekennzeichnet, dass** der Speicherraum (14) zumindest zu Beginn der Speicherphase durch einseitige Höhenverstellung zumindest eines Förderers (15, 16) eine in Richtung des Einlassbereichs (20) der Presskammer (3) sich verjüngende keilförmige Ausgestaltung einnimmt, die dann zunehmend durch das Schneid- und/oder Förderaggregat (11) mit Erntegut gefüllt wird und während der Befüllung des Speicherraums (14) die keilförmige Ausgestaltung des Speicherraums (14) aufgehoben wird, so dass dann die antreibbaren Förderer (15, 16) des Speicherraums (14) zumindest eine etwa parallele Lage zueinander einnehmen, wobei sich die keilförmige Ausgestaltung zusätzlich verdichtend auf das Erntegut auswirkt.

2. Verfahren nach Anspruch 1, **dadurch gekennzeichnet, dass** die Aufhebung der keilförmigen Ausgestaltung des Speicherraums (14) während der Speicherphase zeit- und/oder druck- und /oder Befüllgrad gesteuert ausgelöst wird.

3. Verfahren nach zumindest einem der vorhergehenden Ansprüche, **dadurch gekennzeichnet, dass** zumindest der den Speicherraum (14) nach unten begrenzende Bodenförderer (15) zu Beginn der Speicherphase durch Förderrichtungsumkehr das im Speicherraum (14) befindliche Erntegut entgegen der Gutflussrichtung mit dem durch das Schneid- und/oder Förderaggregat (11) dem Speicherraum (14) gleichzeitig zusätzlich zugeführten Erntegut im Anfangsbereich des Speicherraums (14) zusammenführt.

4. Verfahren nach einem der Ansprüche 2 oder 3, **dadurch gekennzeichnet, dass** im weiteren Verlauf der Speicherphase bei zunehmender Befüllung des Speicherraums (14) eine Förder- und Presseinrichtung (19) der Presskammer (3) in Verbindung mit einem dieser zugeordneten Abdeckelement (21) als Sperreinrichtung einen Gutübergang vom Speicherraum (14) zur Presskammer (3) verhindert.

5. Verfahren nach Anspruch 4, **dadurch gekennzeichnet, dass** sich im weiteren Ablauf die Fördereinrichtung (19) ereignis- und/oder zeitgesteuert derart verlagert, dass gleichzeitig die Sperrwirkung für den Gutübergang vom Speicherraum (14) zur Presskammer (3) aufgehoben wird und eine Einlassöffnung (20) der Presskammer (3) für den ungehinderten Übergang des im Speicherraum (14) zwischengespeicherten Ernteguts in die Presskammer (3) vergrößert wird, wobei die Fördereinrichtung (19) die antreibbaren Förderer (15, 16) des Speicherraums (14) dabei für einen möglichst schnellen Übergang des Ernteguts unterstützt.

6. Verfahren nach einem oder mehreren der vorhergehenden Ansprüche, **dadurch gekennzeichnet, dass** die Steuer- und Regeleinrichtung der Rundballenpresse (1) auf Grundlage einer hinterlegten theoretischen Mindestzeit für die Pressung eines durch vorgebbare Parameter definierten Erntegutballens und unter Einbeziehung aktuell ermittelter Erntegutparameter, zu jedem Zeitpunkt des Ballenentstehungsprozesses den Erntegutfluss derart regelt, dass in der jeweils ermittelten Sollpresszeit der vordefinierte Ballen bei maximaler Maschinenauslastung entsteht.

7. Verfahren nach Anspruch 6, **dadurch gekennzeichnet, dass** die Steuer- und Regeleinrichtung der Rundballenpresse (1), durch ständigen zeitlichen Soll-Istabgleich in Abhängigkeit vom aktuellen Ballendurchmesser und/oder Gewicht während des Ballenzuwachses der Antriebseinheit oder dem Zugfahrzeug ein Fahrgeschwindigkeits-Sollwertsignal bereitstellt, worauf die Fahrgeschwindigkeit vorzugsweise automatisch gesteuert wird.

## Claims

1. Method for controlling the crop flow of an agricultural round baler (1) for forming round bales from harvested crop in a pressing chamber (3) provided with an outlet on the rear side for outputting a finished round bale, comprising pressing devices (18), a harvested crop pick-up (10) and a subsequent cutting and/or conveying unit (11), an accumulation space (14) that adjoins said unit, extends as far as an inlet region (20) of the pressing chamber (3), is designed as a flat shaping and pressing channel, receives harvested crop during accumulation phases of the pressing operation, and is delimited, to the sides, by side walls and, at the top and bottom, by driveable conveyors (15, 16), at least the bottom conveyor (15) being height-adjustable at the ends thereof, and comprising an apparatus for wrapping a finished round bale in binding material in the pressing chamber (3) and a control device, **characterised in that**, at least at the start of the accumulation phase, the accumulation space (14) assumes, by the height of at least one of the conveyors (15, 16) being adjusted at one end thereof, a wedge shape that tapers towards the inlet region (20) of the pressing chamber (3), which shape is then increasingly filled with harvested crop by the cutting and/or conveying unit (11), and when the accumulation space (14) is being filled, the wedge shape of the accumulation space (14) is cancelled out such that the driveable conveyors (15, 16) of the accumulation space (14) then assume at least a position in which they are approximately in parallel with one another, the wedge shape additionally having a sealing effect on the harvested crop.

2. Method according to claim 1, **characterised in that** the cancelling out of the wedge shape of the accumulation space (14) is triggered during the accumulation phase in a manner controlled according to time and/or pressure and/or the degree of filling.

3. Method according to at least one of the preceding claims, **characterised in that**, at the start of the accumulation phase, at least the bottom conveyor (15) defining the accumulation space (14) at the bottom combines, in the starting region of the accumulation space (14), counter to the crop flow direction and by reversing the conveying direction, the harvested crop located in the accumulation space (14) with the additional harvested crop that is simultaneously supplied by the cutting and/or conveying unit (11) to the accumulation space (14).

4. Method according to either claim 2 or claim 3, **characterised in that**, throughout the remainder of the accumulation phase, a conveying and pressing device (19) of the pressing chamber (3), in conjunction with a cover element (21) associated with said conveying and pressing device, as a blocking device, prevents crop from passing from the accumulation space (14) into the pressing chamber (3) when the accumulation space (14) is being increasingly filled.

5. Method according to claim 4, **characterised in that**, in a further stage, the conveying device (19) moves in a manner controlled according to events and/or time such that, simultaneously, the blocking effect is cancelled out so as to allow crop to pass from the accumulation space (14) into the pressing chamber (3) and an inlet opening (20) in the pressing chamber (3) is enlarged so as to allow harvested crop temporarily stored in the accumulation space (14) to pass freely into the pressing chamber (3), the conveying device (19) thereby assisting the driveable conveyors (15, 16) of the accumulation space (14) so as to allow the harvested crop to pass through as quickly as possible.

6. Method according to one or more of the preceding claims, **characterised in that** the control device of the round baler (1) controls the flow of harvested crop at any time in the bale formation process on the basis of a stored theoretical minimum time for a harvested crop bale defined by predeterminable parameters to be pressed and by incorporating harvested crop parameters determined in real time, such that the predefined bale is formed, in the target pressing time determined in each case, at maximum utilisation of mechanical capacity.

7. Method according to claim 6, **characterised in that** the control device of the round baler (1) provides a target value signal for speed of travel on the basis of the current bale diameter and/or weight, during bale growth, of the drive unit or the towing vehicle by, over time, continuously comparing variance, whereupon the speed of travel is controlled preferably automatically.

## Revendications

1. Procédé de commande du flux de produits d'une presse à balles rondes (1), agricole, pour former des balles rondes avec des produits de récolte dans une chambre de presse (3) munie d'installations de presse (18) avec une sortie arrière pour éjecter la balle ronde terminée, un pic-up (10) et en aval, une unité de coupe et/ou de transfert (11), une chambre d'accumulation (14) faisant suite et s'étendant jusqu'à la zone d'entrée (20) de la chambre de presse (3), espace réalisé comme canal de mise en forme et de presse, qui recueille le produit de récolte dans les phases d'accumulation du fonctionnement de la presse et est délimité latéralement par des parois et en bas et en haut par des convoyeurs entraînés (15, 16),
- au moins le convoyeur inférieur (15) ayant un côté d'extrémité réglable en hauteur et un dispositif pour le ficelage de la balle ronde terminée avec un matériau de liage dans la chambre de presse (3) et une installation de commande et de régulation,
procédé **caractérisé en ce qu'**
au moins au début de la phase d'accumulation, l'espace d'accumulation (14) prend une forme de coin allant en diminuant dans la direction de la zone d'entrée (20) de la chambre de presse (3), par le réglage en hauteur d'un côté d'au moins un convoyeur (15, 16), cette forme étant remplie progressivement avec le produit de récolte par l'unité de coupe et/ ou de transfert (11) et pendant le remplissage de l'espace d'accumulation (14) on supprime la forme de coin de cet espace d'accumulation (14) pour que les convoyeurs entraînés (15, 16) de l'espace d'accumulation (14) prennent une position au moins sensiblement parallèle,
- la forme de coin se traduisant en plus par la compression du produit de récolte.

2. Procédé selon la revendication 1,
**caractérisé en ce que**
la neutralisation de la forme de coin de l'espace d'accumulation (14) est déclenchée de façon commandée pendant la phase d'accumulation, en fonction du temps et/ou de la pression et/ou du degré de remplissage.

3. Procédé selon au moins l'une des revendications précédentes,
**caractérisé en ce qu'**
au début de la phase d'accumulation, le convoyeur inférieur (15) délimitant l'espace d'accumulation (14), en inversant le sens du transfert, regroupe les produits de récolte qui se trouvent dans l'espace d'accumulation (14) à contre courant, dans la zone d'entrée de l'espace d'accumulation (14), les produits que l'unité de coupe et/ou de transfert (11) introduit en même temps dans l'espace d'accumulation (14).

4. Procédé selon l'une des revendications 2 ou 3,
**caractérisé en ce qu'**
au cours de la poursuite de la phase d'accumulation, avec le remplissage croissant de l'espace d'accumulation (14), l'installation de transfert et de presse (19) de la chambre de presse (3) en combinaison avec un élément de couverture (21), associé comme installation de blocage, bloque le passage des produits de l'espace d'accumulation (14) vers la chambre de presse (3).

5. Procédé selon la revendication 4,
**caractérisé en ce que**
dans la suite du processus, l'installation de transfert (19) se déplace, de façon commandée en fonction des événements et/ou du temps, pour supprimer simultanément l'effet de blocage du passage des produits de l'espace d'accumulation (14) vers la chambre de presse (3) et agrandit l'orifice d'entrée (20) de la chambre de presse (3) pour un passage sans obstacle du produit de récolte accumulé provisoirement dans l'espace d'accumulation (14) vers la chambre de presse (3),
- l'installation de transfert (19) assistant les convoyeurs entraînés (15, 16) de l'espace d'accumulation (14) pour faire un transfert aussi rapide que possible du produit.

6. Procédé selon l'une ou plusieurs des revendications précédentes,
**caractérisé en ce que**
l'installation de commande et de régulation de la presse à balles rondes (1) s'appuyant sur la base d'un temps minimum théorique enregistré pour la compression d'une balle de produit, définit par des paramètres donnés, et en utilisant les paramètres de produit déterminés actuellement, à chaque instant du processus de formation de balles, le flux de produit de façon à obtenir la durée de compression de consigne, déterminée respectivement pour les balles prédéfinies pour un rendement maximum de la machine.

7. Procédé selon la revendication 6,
**caractérisé en ce que**
par un asservissement permanent dans le temps entre la consigne et la valeur réelle, en fonction du diamètre actuel de la balle et/ou du poids pendant le développement de la balle, l'installation de commande et de régulation de la presse à balles rondes (1), fournit un signal de consigne de vitesse de fonctionnement à l'unité d'entraînement et/ ou au tracteur, de façon à commander de préférence automatiquement la vitesse de circulation.
